# EUROPEAN PATENT SPECIFICATION

(11) **EP 2 831 470 B1**
(45) Date of publication and mention of the grant of the patent: **04.05.2016**
(21) Application number: 13717294.6
(22) Date of filing: 14.03.2013
(51) Int. Cl.: F16J 1/16, F16J 1/18, F16J 7/00

(54) **A PISTON PIN ASSEMBLY**
KOLBENBOLZENANORDNUNG
ENSEMBLE BROCHE ET PISTON

(30) Priority: 29.03.2012 FI 20125355
(43) Date of publication of application: 04.02.2015
(73) Proprietor: Wärtsilä Finland Oy, 65380 Vaasa (FI)
(72) Inventor: JUSSILA, Sami, FI-65350 Vaasa (FI); NYNÄS, Håkan, FI-65280 Vaasa (FI); TIRKKONEN, Esa, FI-00530 Helsinki (FI)
(74) Representative: Genip Oy
(86) International application number: PCT/FI2013/050288
(87) International publication number: WO 2013/144429

(56) References cited:
- EP-A2- 0 219 634
- WO-A1-93/20369
- US-A- 4 687 348

## Description

### Technical field

The present invention relates to internal combustion piston engines. Particularly, the present invention relates to adjusting compression ratio of the piston engine by means of a piston pin assembly, which piston pin assembly comprises a piston pin having at its first end and its second end a first and a second affixing area for attaching the piston pin to a piston, and between the first and the second ends, at a center area a third affixing area for attaching the piston pin assembly to a connecting rod, and in which piston pin assembly the first and the second ends having a common first central axis and the center area having a second central axis which axes are offset at a distance from each other.

### Background art

In internal combustion piston engines the reciprocating movement of the piston is transformed into a rotating movement of the crankshaft by connecting each piston via a connecting rod to the crankshaft. In a trunk piston engine the piston has been installed by a small end bearing to the connecting rod so that the connecting rod may rotate in relation to the piston. It is known in the art to attach a piston to a connecting rod by means of a floating piston pin. In this solution the piston pin has been arranged against the bearing surfaces of the connecting rod so that in operation it can rotate into any position. In other words only the movement of the pin in the longitudinal direction is limited. Another piston pin type is a locked pin. This kind of the piston pin is locked also for the rotating movement either to the piston or the connecting rod, thus it cannot rotate even during the running of the engine.

Attempts to accomplish dynamic i.e. on the fly variable compression ratio in an internal combustion piston engine have been made since long time ago. One of the most common ways of approach to this includes an effective lengthening and shortening of the connecting rod, which joins the reciprocating piston to a rotating crankshaft. Naturally this requires the use of locked pin. Some of the solutions are proposing an eccentric piston pin connection provided at the articulating joint between the small end of the connecting rod and the piston.

For example DE 19503425 discloses a piston engine in which the effective length of the connecting rod may be adjusted. A piston pin which joins the connecting rod to the piston is provided with an eccentric bushing. The eccentric bushing is provided with fixed stop discs at its ends, protruding axially over either sides of the small end of the connecting rod. There are stop notches arranged to the rim of the disks which together with a locking member may retain the bushing at two positions corresponding two effective lengths of the connecting rod.

GB 2454340 discloses a variable compression ratio piston and connecting rod assembly for an internal combustion engine which includes an eccentric bushing that carries a piston pin bushing and contains a journaled portion held in the rod bore of the connecting rod. The eccentric bushing can be selectively rotated between either of two rotary adjusted positions to effect a change in the height of the piston relative to the connecting rod and thus change the compression ratio of the assembly.

EP0219634, which constitutes the closest prior art, describes compression ratio changing device for an internal combustion engine using an eccentric bearing interposed between a piston pin and a connecting rod. A lock hole is formed in the eccentric bearing and a lock pin hole is formed in the connecting rod. A lock pin is slidably inserted in the lock pin hole and it may move into or out of the lock hole in the eccentric bearing. When the lock pin engages lock hole, the rotation of the eccentric bearing is locked. When the lock pin moves apart from the lock hole, the rotation of the eccentric bearing becomes free. To obtain a smooth entry of the lock-pin into the lock hole, a guide groove is formed in the outer portion of the eccentric bearing.

The solutions described are practically substantially complex or have shortcomings in respect to their operation.

It is an object of the invention to provide which provides simple and reliable construction and well controllable operation.

### Disclosure of the Invention

The objects of the invention are substantially met by a piston pin assembly for an internal combustion piston engine, which piston pin assembly comprises a piston pin having at its first end and its second end a first and a second affixing area for attaching the piston pin to a piston and between the first and the second ends, at a center area, a third affixing area for attaching the piston pin assembly to a connecting rod, and in which piston pin assembly the first and the second end having a common first central axis and the center area having a second central axis which axes are offset at a distance from each other by means of a rotatable eccentric sleeve arranged around the piston pin at the center area.The assembly comprises a mechanism which includes at least a first setting and a second setting, in which first setting the mechanism locks the position of the second central axis in respect to the first central axis and in which second setting the mechanism actuates a change in the position of the second central axis in respect to the first central axis when in use and assembled to a cranking or operating internal combustion piston engine. It is characteristic to the invention that a number of radially extending through-holes is arranged at a longitudinal position to the eccentric sleeve, a pin is arranged into each of the through-hole, the pins having a length which length is more than the radial thickness of the eccentric sleeve at the location of the pin, and a cavity is arranged at the longitudinal position in the piston pin, the cavity having a diameter allowing anyone of the pins to enter the cavity and having a depth of a predetermined coupling length.

According to an embodiment of the invention the change in the position of the second axis in respect to the first axis is arranged to take place by rotational movement of the connecting rod and/or piston pin in respect the piston.

According to an embodiment of the invention the offset between the first and the second axes is arranged by means of a rotatable eccentric sleeve arranged around the piston pin at the center area.

According to an embodiment of the invention the mechanism comprises a number of radially extending through-holes arranged at a longitudinal position to the eccentric sleeve.

According to an embodiment of the invention the mechanism comprises a groove arranged to an inner surface of a small end bearing housing of a connecting rod at the longitudinal position, extending angularly less than 360 degrees, when assembled to an internal combustion piston engine.

According to an embodiment of the invention there is a land between the ends of the groove having an angular length corresponding the angular turning of the small end of the connecting rod in respect of the piston during a revolution of the engine.

According to an embodiment of the invention the piston pin is locked in respect to the piston and the cavity at the longitudinal position in the piston pin is arranged so that its position in respect to the small end bearing surface of a connecting rod may extend to both sides of the solid land between the ends of the groove while the small end bearing is rotating in respect of the piston.

According to an embodiment of the invention the assembly comprises an actuator arranged to the bottom of the groove at the location vicinity to the solid land, which actuator is arranged to cause a movement of the pin towards the second central axis.

According to an embodiment of the invention the actuator is preferably a hydraulically operated actuator by making use of lubrication oil of the engine, and an oil flow path arranged to the connecting rod is provided with a control system by mean of which the actuator may be activated and deactivated.

According to an embodiment of the invention the actuator comprises a valve that is closed when the lubricating oil pressure is on normal, first level and opened when the lubricating oil pressure is on elevated, second level above the first level.

The present invention is particularly suitable in optimising the performance of a dual fuel engine for operation with both gas and liquid fuels. By means for the invention it is possible to set the compression ratio suitably for liquid fuel and when, during the operation of the engine, changing to gas operated mode set the compression ratio to second setting in order to cope with knocking limit of gaseous fuel.

The present invention is suitable for changing compression ration during the operation of the engine in general.

### Brief Description of Drawings

In the following, the invention will be described with reference to the accompanying exemplary, schematic drawings, in which
Figure 1 illustrates a section view of piston pin assembly according to an embodiment of the invention,
Figure 2 illustrates another section view of piston pin assembly according to an embodiment of the invention,
Figure 3 illustrates the piston pin assembly of Figure 1 having connecting rod at different position, with details 3a1, 3a2 and 3a3, and
Figure 4 illustrates a section view of piston pin assembly according to another embodiment of the invention.

### Detailed Description of Drawings

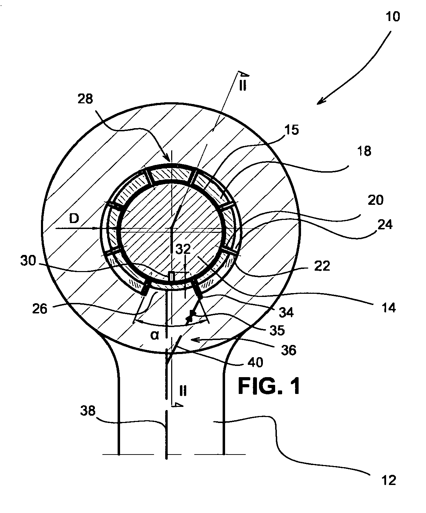

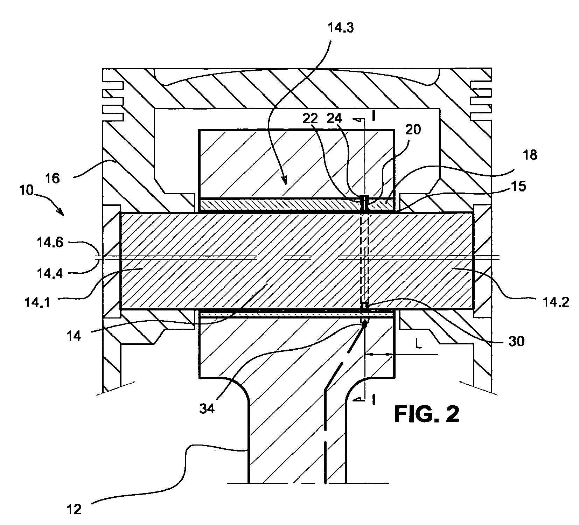

In figures 1 and 2 there are schematically shown a piston pin assembly 10 according to an embodiment of the invention as different cuta-ways I, II. The piston pin assembly provides variable compression ratio operation for the piston engine comprising such piston pin assembly.

The assembly is arranged in connection with a connecting rod 12, the connecting rod being connected at its big end to a crank shaft of an internal combustion engine (not shown). The assembly comprises a piston pin 14 which is journaled to the small end of the connecting rod. The piston pin is provided with a bearing 15 surrounding it. On the other hand the piston pin connects the piston 16 to the connecting rod 12.

The piston pin 14 has at its first end 14.1 and its second end 14.2 a first and a second affixing area for attaching the piston pin to a piston 16 and between the first and the second ends, at a center area 14.3, a third affixing area for attaching the piston pin assembly 10 to the connecting rod 12. The first and the second ends have a common first central axis 14.4. The center area 14.3 is eccentric to the first and the second ends, in other words the center area has a second central axis 14.6 which is offset at a distance from the first central axis 14.4. The assembly comprises a mechanism which includes at least a first setting and a second setting, which first setting the mechanism locks the position of the second central axis 14.6 in respect to the first central axis 14.4 and which second setting the mechanism actuates a change in the position of the second central axis 14.6 in respect to the first central axis 14.4 when in use and assembled to a cranking or operating internal combustion piston engine, an embodiment of which is described following.

In the embodiment of figures 1 and 2 the offset between the first and the second axes is arranged by means of a rotatable eccentric sleeve 18 arranged around the piston pin at the center area 14.3.

The eccentric sleeve 18 is provided with a number of radially extending through-holes 20 arranged to the sleeve at a longitudinal position L to the sleeve. The holes are arranged as equally spaced array. In each of the hole 20 in the sleeve there is pin 22 arranged longitudinally movably. In this embodiment of the invention each pin is of equal length and the pins have a length which is more than the radial thickness of the eccentric sleeve at the location of the pin.

The assembly is intended to be used in connection with a connecting rod which comprises a groove 24 arranged to an inner surface of a small end bearing housing of the connecting rod at the longitudinal position, extending angularly over an angle less than 360 degrees, when assembled to an internal combustion piston engine. There is a solid land 26 between the ends of the groove 24 has an angle α at the longitudinal position L. The angle α is less than or equal to the angular range between two extreme position which the crank shaft rotates in respect to the piston while the engine is cranking. However, preferably the angle α is equal to said angular range the crank shaft rotates in respect to the piston while the engine is cranking. Since each pin in this embodiment is of equal length, the groove 24 has a depth D which gradually increases at both sides of the bearing hole from a first depth at the top part 28 of the bearing hole at the small end of the crank shaft to the solid land 26.

Additionally the piston pin 14 is provided with a cavity 30 at the longitudinal position L in the piston pin, the cavity having a diameter allowing anyone of the pins 22 to enter the cavity and having a depth of predetermined coupling length 32 which is at least the length of the portion of the pin 22 extending radially out of the eccentric sleeve at the location vicinity to the solid land 26. The assembly further comprises an actuator 34 arranged to the bottom of the groove 24 at the location vicinity to the solid land 26. The actuator is arranged to cause a movement of the pin 20 towards the second central axis 14.6. The actuator is preferably a hydraulically operated actuator by making use of lubrication oil of the engine. The actuator is connected to the lubrication system by means of an oil flow path 36 arranged to the connecting rod and crank shaft and the oil flow path is provided with a control system by mean of which the actuator may be activated and deactivated.

Now, at initial stage as shown in figures 1 and 2 the eccentric sleeve is at a position which provides longest distance between the second central axis and the big end bearing centreline. This provides the smallest possible clearance volume of the combustion chamber and thus highest possible compression ratio for a given geometry. In this stage the eccentric sleeve is locked to the connecting rod and the surface between the eccentric sleeve and the piston pin operates as the bearing surface.

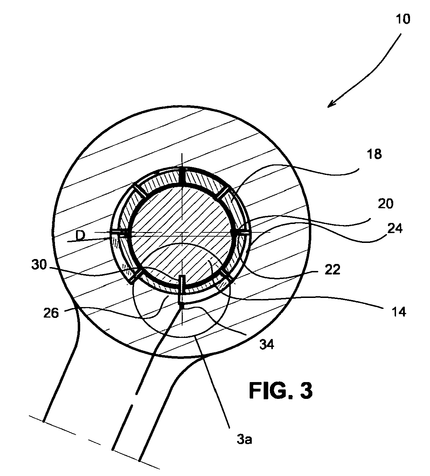

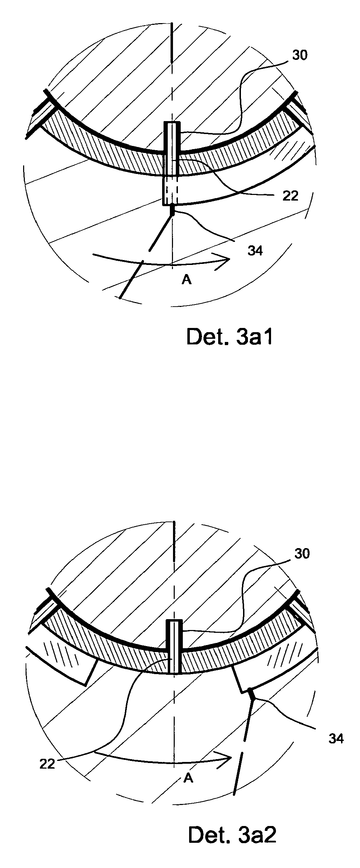

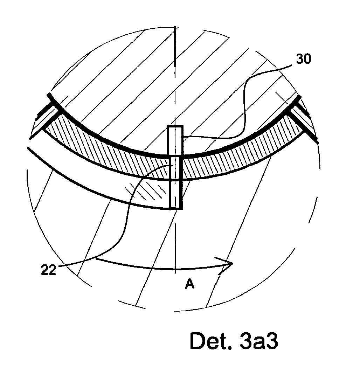

The operation of the piston pin assembly shown in figure 1 and 2 is described in the following with the reference to figure 3 and the detailed views 3a1 ...3a3, when the setting of the assembly is changed from a first setting at which the mechanism locks the position of the second axis14.6 in respect to the first axis 14.4. to a second setting at which the mechanism actuates a change in the position of the second axis in respect to the first axis when in use and assembled to a cranking or operating internal combustion piston engine.

In the figure 3a the connecting rod of has been rotated at its small end in respect to the piston pin to its extreme position when the crank shaft is at 90° from top dead center, TDC, i.e. 90° after TDC position. It should be noted that the rotation of the piston pin in respect to the piston is normally prevented or locked. At this stage the rotating movement of the connecting rod in respect to the piston pin is momentarily stopped when the direction of rotation of the connecting rod changes in respect to the piston.

As is more closely described in the detailed view 3a1 corresponding the setting shown in figure 3 the cavity 30 in the piston pin is now in line with the pin at the end the groove where also the actuator 34 is located. Now the actuator is activated pushing the pin radially into the cavity. The initial position of the pin extending to the cavity is shown with dotted line and the new position with solid line. In the new position the pin located radially out of the groove. While the connecting rod continues its rotation from its extreme position as depicted by an arrow A and the pin 22 which was before preventing the rotational movement of the connecting rod in respect to the eccentric sleeve in the direction of arrow A, now being out of the groove allows the transition of the solid land past the pin which is depicted in detail 3a2 corresponding about TDC position. Additionally, at this stage the eccentric sleeve is rotationally locked to the piston pin and the surface between the eccentric sleeve and the connecting rod operates as the bearing surface. When the rotation of the engine continues to 90° before TDC position shown in 3a3 the pin 22 is returned out of the cavity 30 so that is bounded by the eccentric sleeve and the groove again. The pin of the cavity may be provided with a spring or alike to provide the returning motion. This particular position is shown in the detail view 3a3. At this stage the eccentric sleeve is locked again to the connecting rod and the surface between the eccentric sleeve and the piston pin operates as the bearing surface. While the engine rotates further so that the cylinder is again at the 90° after TDC position the sequence may be initiated again. The rotation of the eccentric sleeve may be accomplished also in opposite direction the sequence starting at 90° BTDC and ending at 90° ATDC. This requires that the actuator needs to be at the other end of the groove, instead or additionally to that shown in figure 1.

This way the embodiment of figures 1 and 2 comprises a mechanism which includes at least a first setting and a second setting, in which first setting the mechanism locks the position of the second axis in respect to the first axis and in which second setting the mechanism actuates a change in the position of the second axis in respect to the first axis when in use and assembled to a cranking or operating internal combustion piston engine Thus, the basic idea of changing the position is to utilize the rotating movement of the connecting rod and/or piston pin in respect the piston.

In order to perform a maximum change in the compression ratio the embodiment of figures 1 and 2 requires 4 engine's revolution.

Figures 5 and 6 disclose another embodiment of piston pin assembly according to the invention which comprises a mechanism having at least a first setting and a second setting, in which first setting the mechanism locks the position of the second central axis 14.6 in respect to the first central axis 14.4 and in which second setting the mechanism actuates a change in the position of the second central axis 14.6 in respect to the first central axis 14.4 when in use and assembled to a cranking or operating internal combustion piston engine.

The piston pin assembly shown in the figure 5 and 6 is also arranged in connection with a connecting rod 12 and a piston 16. The assembly comprises a piston pin 14 which is journaled to the small end of the connecting rod. The piston pin connects the piston 16 to the connecting rod 12.

The piston pin 14 has at its first end 14.1 and its second end 14.2 a first and a second affixing area for attaching the piston pin to a piston 13 and between the first and the second ends, at a center area 14.3, a third affixing area for attaching the piston pin assembly 10 to the connecting rod 12. All the affixing areas are or circular cross section. The first and the second ends have a common first central axis 14.4. The center area 14.3 is eccentric to the first and the second ends, in other words the center area has a second central axis 14.6 which is offset at a distance from the first central axis 14.4.

According to an embodiment of the invention the oil flow path 36 comprises lubrication oil channel 38 supplying oil to the bearing surfaces of the piston pin arrangement. There is an additional oil channel 40 for variable compression ratio actuator 34 arranged so that it may be machined easily to conventional connecting rod. No additional holes are needed because channel is located so that it may be bored from the side of the piston pin hole. Thus an existing piston engine may be upgraded by providing the additional oil channel 40 into the connecting rod, arranging the groove 24 to an inner surface of the small end bearing housing at the longitudinal position L and installing the assembly according to the embodiment of the invention described in connection with the figure 1 and 3 thereto.

The assembly according to the embodiment of the invention described in connection with the figure 1 and 3 is, according to an embodiment of the invention operated so that the channel 40 is provided with a valve 35 that is closed when the lubricating oil pressure is on normal, first level and opened when the lubricating oil pressure is on elevated, second level above the first level. While operating the engine and the change of compression ratio is desired the lubrication oil pressure fed through the flow path 36 is temporarily increased to the second level opening the valve 35. This allows the flow of lubricating oil to the actuator 34 thus actuating the operation of the arrangement.

According to an embodiment of the invention the actuating is performed so that engine load is decreased as low as possible considering the circumstances and after that the lubricating oil pressure is increased much higher, for example to 10bar, than normal, for example 5bar. Thus the increased pressure opens the valve 35 in oil channel and when valve is open, the oil pressure activates actuator 34.

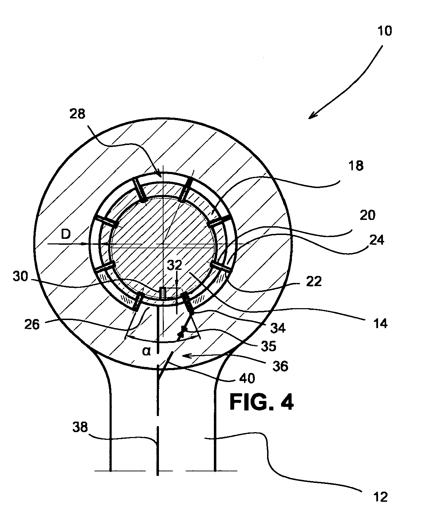

In figure 4 there is schematically shown a piston pin assembly 10 according to another embodiment of the invention. Practically only differences in this embodiment to that of the figure 1 is that the pins 22 are of different length and the groove has a constant depth D at both sides of the bearing hole. The piston pin assembly of figure 4 provides variable compression ratio operation for the piston engine comprising such piston pin assembly correspondingly to that of figure 1.

While the invention has been described herein by means of examples in connection with what are, at present, considered to be the most preferred embodiments, it is to be understood that the invention is not limited to the disclosed embodiments, but is intended to cover various combinations or modifications of its features, and several other applications included within the scope of the invention, as defined in the appended claims. The details mentioned in connection with any embodiment above may be used in connection with another embodiment when such combination is technically feasible.

## Claims

1. Piston pin assembly for an internal combustion piston engine, which piston pin assembly comprises a piston pin (14) having at its first end (14.1) and its second end (14.2) a first and a second affixing area for attaching the piston pin to a piston and between the first and the second ends, at a center area (14.3) a third affixing area for attaching the piston pin assembly (10) to a connecting rod (12), and in which piston pin assembly the first and the second ends having a common first central axis (14.4) and the center area having a second central axis (14.6) which axes are offset at a distance from each other by means of a rotatable eccentric sleeve (18) arranged around the piston pin at the center area, which assembly comprises a mechanism which includes at least a first setting and a second setting, which first setting the mechanism locks the position of the second central axis in respect to the first central axis (14.4) and which second setting the mechanism actuates a change in the position of the second central (14.6) axis in respect to the first central axis when in use and can be assembled to a cranking or operating internal combustion piston engine, **characterized in that** the mechanism comprises a number of radially extending through-holes (20) arranged at a longitudinal position to the sleeve (18), a pin (22) arranged into each of the through-hole, the pins having a length which is more than the radial thickness of the eccentric sleeve at the location of the pin, and a cavity (30) at the longitudinal position (L) in the piston pin (14), the cavity having a diameter allowing anyone of the pins (22) to enter the cavity and having a depth of a predetermined coupling length (32).

2. Piston pin assembly according to claim 1, **characterized in that** the change in the position of the second axis in respect to the first axis is arranged to take place by rotational movement of the connecting rod and/or piston pin in respect the piston.

3. Piston pin assembly according to claim 1, **characterized in that** the mechanism comprises a groove (24) arranged to an inner surface of a small end bearing housing of a connecting rod (12) at the longitudinal position (L), extending angularly less than 360 degrees, when assembled to an internal combustion piston engine.

4. Piston pin assembly according to claim 3, **characterized in that** the pins (22) having equal length and the groove has a depth D which gradually increases at both sides of the bearing hole from a first depth at the top part (28) of the bearing hole at the small end of the crank shaft to the solid land (26).

5. Piston pin assembly according to claim 3, **characterized in that** the pins (22) having different length and the groove has a constant depth D at both sides of the bearing hole.

6. Piston pin assembly according to claim 3, **characterized in that** there is a land (26) arranged between the ends of the groove having an angular length corresponding the angular turning of the small end of the connecting rod in respect of the piston during a revolution of the engine.

7. Piston pin assembly according to claim 4, **characterized in that** the piston pin (14) is locked in respect to the piston (16) and the cavity (30) at the longitudinal position (L) in the piston pin is arranged so that its position in respect to the small end bearing surface of a connecting rod may extend to both sides of the solid land between the ends of the groove due to reciprocating rotation of the small end of the connecting rod (12).

8. Piston pin assembly according to claim 1, **characterized in that** the assembly comprises an actuator (34) arranged to the bottom of the groove (24) at the location vicinity to the solid land (26), which actuator is arranged to cause a movement of the pin (20) towards the second central axis (14.6).

9. Piston pin assembly according to claim 8, **characterized in that** the actuator is preferably a hydraulically operated actuator by making use of lubrication oil of the engine, and an oil flow path (36) arranged to the connecting rod is provided with a control system by mean of which the actuator may be activated and deactivated.

10. Piston pin assembly according to claim 9, **characterized in that** the actuator comprises a valve (35) that is closed when the lubricating oil pressure is on normal, first level and opened when the lubricating oil pressure is on elevated, second level above the first level.

## Patentansprüche

1. Kolbenbolzenbaugruppe für eine Kolben-Verbrennungskraftmaschine, wobei die Kolbenbolzenbaugruppe einen Kolbenbolzen (14) umfasst, der an seinem ersten Ende (14.1) und an seinem zweiten Ende (14.2) einen ersten und einen zweiten Befestigungsbereich zum Befestigen des Kolbenbolzens an einem Kolben und zwischen dem ersten und dem zweiten Ende, an einem Mittenbereich (14.3), einen dritten Befestigungsbereich zum Befestigen der Kolbenbolzenbaugruppe (10) an einer Pleuelstange (12) aufweist, und wobei bei der Kolbenbolzenbaugruppe das erste und das zweite Ende eine gemeinsame erste Mittelachse (14.4) haben und der Mittenbereich eine zweite Mittelachse (14.6) aufweist, wobei die Achsen bei einer Entfernung voneinander versetzt sind, mit Hilfe einer drehbaren exzentrischen Hülse (18), die an dem Mittenbereich um den Kolbenbolzen angeordnet ist, wobei die Baugruppe einen Mechanismus umfasst, der wenigstens eine erste Einstellung und eine zweite Einstellung einschließt, wobei der Mechanismus in der ersten Einstellung die Stellung der zweiten Mittelachse in Bezug auf die erste Mittelachse (14.4) arretiert und wobei der Mechanismus in der zweiten Einstellung eine Veränderung bei der Stellung der zweiten Mittelachse (14.6) in Bezug auf die erste Mittelachse veranlasst, und an eine anlassende oder arbeitende Kolben-Verbrennungskraftmaschine angebaut werden kann, **dadurch gekennzeichnet, dass** der Mechanismus eine Anzahl von sich in Radialrichtung erstreckenden Durchgangslöchern (20), die bei einer Längsposition zu der Hülse (18) angeordnet sind, einen Bolzen (22), der in jedem der Durchgangslöcher angeordnet ist, wobei die Bolzen eine Länge aufweisen, die mehr beträgt als die radiale Dicke der exzentrischen Hülse an der Position des Bolzens, und einen Hohlraum (30) bei der Längsposition (L) in dem Kolbenbolzen (14) umfasst, wobei der Hohlraum einen Durchmesser aufweist, der es ermöglicht, dass ein beliebiger der Bolzen (22) in den Hohlraum eintritt, und eine Tiefe von einer vorbestimmten Kopplungslänge (32) aufweist.

2. Kolbenbolzenbaugruppe nach Anspruch 1, **dadurch gekennzeichnet, dass** die Veränderung bei der Stellung der zweiten Achse in Bezug auf die erste Achse dafür angeordnet ist, durch eine Drehbewegung der Pleuelstange und/oder des Kolbenbolzens in Bezug auf den Kolben stattzufinden.

3. Kolbenbolzenbaugruppe nach Anspruch 1, **dadurch gekennzeichnet, dass** der Mechanismus eine Rille (24) umfasst, die an einer Innenfläche eines Kolbenbolzenlagergehäuses einer Pleuelstange (12) bei der Längsposition (L) angeordnet ist, wobei sie sich winklig weniger als 360° erstreckt, wenn sie an eine Kolben-Verbrennungskraftmaschine angebaut ist.

4. Kolbenbolzenbaugruppe nach Anspruch 3, **dadurch gekennzeichnet, dass** die Bolzen (22) eine gleiche Länge aufweisen und die Rille eine Tiefe D aufweist, die auf beiden Seiten des Lagerlochs von einer ersten Tiefe an dem oberen Teil (28) des Lagerlochs am Kolbenbolzenende der Pleuelstange bis zu dem massiven Steg (26) allmählich zunimmt.

5. Kolbenbolzenbaugruppe nach Anspruch 3, **dadurch gekennzeichnet, dass** die Bolzen (22) eine unterschiedliche Länge aufweisen und die Rille eine konstante Tiefe D auf beiden Seiten des Lagerlochs aufweist.

6. Kolbenbolzenbaugruppe nach Anspruch 3, **dadurch gekennzeichnet, dass** ein Steg (26) zwischen den Enden der Rille angeordnet ist, der eine Winkellänge aufweist, die der Winkeldrehung des Kolbenbolzenendes der Pleuelstange in Bezug auf den Kolben während einer Umdrehung der Kraftmaschine entspricht.

7. Kolbenbolzenbaugruppe nach Anspruch 4, **dadurch gekennzeichnet, dass** der Kolbenbolzen (14) in Bezug auf den Kolben (16) arretiert ist und der Hohlraum (30) bei der Längsposition (L) in dem Kolbenbolzen so angeordnet ist, dass sich seine Stellung in Bezug auf die Kolbenbolzenlagerfläche einer Pleuelstange auf Grund einer hin- und hergehenden Drehung des Kolbenbolzenendes der Pleuelstange (12) bis zu beiden Seiten des massiven Stegs zwischen den Enden der Rille erstrecken kann.

8. Kolbenbolzenbaugruppe nach Anspruch 1, **dadurch gekennzeichnet, dass** die Baugruppe ein Betätigungselement (34) umfasst, das an der Sohle der Rille (24) an einer Position, nahe dem massiven Steg (26) angeordnet ist, wobei das Betätigungselement dafür angeordnet ist, eine Bewegung des Bolzens (22) hin zu der zweiten Mittelachse (14.6) zu veranlassen.

9. Kolbenbolzenbaugruppe nach Anspruch 8, **dadurch gekennzeichnet, dass** das Betätigungselement vorzugsweise ein hydraulisch betriebenes Betätigungselement durch die Verwendung von Schmieröl der Kraftmaschine ist und eine Ölströmungsbahn (36), die an der Pleuelstange angeordnet ist, mit einem Steuerungssystem versehen ist, mit dessen Hilfe das Betätigungselement aktiviert und deaktiviert werden kann.

10. Kolbenbolzenbaugruppe nach Anspruch 9, **dadurch gekennzeichnet, dass** das Betätigungselement ein Ventil (35) umfasst, das geschlossen wird, wenn sich der Schmieröldruck auf einem normalen, ersten Niveau befindet, und geöffnet, wenn sich der Schmieröldruck auf einem erhöhten, zweiten Niveau oberhalb des ersten Niveaus befindet.

## Revendications

1. Ensemble d'axes de piston pour un moteur à pistons à combustion interne, lequel ensemble d'axes de piston comprend un axe de piston (14) ayant à sa première extrémité (14.1) et à sa deuxième extrémité (14.2) une première et une deuxième zone d'attache pour attacher l'axe de piston à un piston et entre les première et deuxième extrémités , à une zone centrale (14.3), une troisième zone d'attache pour attacher l'ensemble d'axes de piston (10) à une bielle (12), et ensemble d'axes de piston dans lequel les première et deuxième extrémités ont un premier axe central commun (14.4) et la zone centrale a un deuxième axe central (14.6), lesquels axes sont déportés à une distance l'un de l'autre au moyen d'un manchon excentrique pouvant tourner (18) agencé autour de l'axe de piston à la zone centrale, lequel ensemble comprend un mécanisme qui comprend au moins un premier réglage et un deuxième réglage, lequel premier réglage de mécanisme bloque la position du deuxième axe central par rapport au premier axe central (14.4) et lequel deuxième réglage du mécanisme actionne un changement de la position du deuxième axe central (14.6) par rapport au premier axe central lorsqu'il est utilisé et peut être monté sur un moteur à pistons à combustion interne démarrant ou fonctionnant, **caractérisé en ce que** le mécanisme comprend un nombre de trous traversants s'étendant radialement (20) agencés à une position longitudinale du manchon (18), un axe (22) agencé dans chaque trou traversant, les axes ayant une longueur qui est supérieure à l'épaisseur radiale du manchon excentrique à l'emplacement de l'axe, et une cavité (30) à la position longitudinale (L) dans l'axe de piston (14), la cavité ayant un diamètre permettant à n'importe lequel des axes (22) de pénétrer dans la cavité et ayant une profondeur d'une longueur d'accouplement préalablement déterminée (32).

2. Ensemble d'axes de piston selon la revendication 1, **caractérisé en ce que** le changement de la position du deuxième axe par rapport au premier axe est agencé pour avoir lieu par déplacement rotatif de la bielle et/ou de l'axe de piston par rapport au piston.

3. Ensemble d'axes de piston selon la revendication 1, **caractérisé en ce que** le mécanisme comprend une rainure (24) agencée sur une surface intérieure d'un petit logement de palier d'extrémité d'une bielle (12) à la position longitudinale (L), s'étendant de façon angulaire à moins de 360 degrés, lorsqu'elle est montée sur un moteur à pistons à combustion interne.

4. Ensemble d'axes de piston selon la revendication 3, **caractérisé en ce que** les axes (22) ayant une longueur égale et la rainure a une profondeur D qui augmente progressivement sur les deux côtés du trou de palier à partir d'une première profondeur à la partie supérieure (28) du trou de palier à la petite extrémité du vilebrequin jusqu'à un cordon plein (26).

5. Ensemble d'axes de piston selon la revendication 3, **caractérisé en ce que** les axes (22) ayant une longueur différente et la rainure a une profondeur constante D aux deux côtés du trou de palier.

6. Ensemble d'axes de piston selon la revendication 3, **caractérisé en ce qu'**il y a un cordon (26) agencé entre les extrémités de la rainure ayant une longueur angulaire correspondant au tournage angulaire de la petite extrémité de la bielle par rapport au piston pendant un tour du moteur.

7. Ensemble d'axes de piston selon la revendication 4, **caractérisé en ce que** l'axe de piston (14) est bloqué par rapport au piston (16) et la cavité (30) à la position longitudinale (L) dans l'axe de piston est agencée de manière à ce que sa position par rapport à la surface de palier de la petite extrémité d'une bielle peut s'étendre des deux côtés du cordon plein entre les extrémités de la rainure en raison de la rotation alternative de la petite extrémité de la bielle (12).

8. Ensemble d'axes de piston selon la revendication 1, **caractérisé en ce que** l'ensemble comprend un actionneur (34) agencé au fond de la rainure (24) à la proximité d'emplacement du cordon plein (26), lequel actionneur est agencé pour déclencher un mouvement de l'axe (20) vers le deuxième axe central (14.6).

9. Ensemble d'axes de piston selon la revendication 8, **caractérisé en ce que** l'actionneur est de préférence un actionneur hydraulique faisant utilisation de l'huile de lubrification du moteur et un chemin d'écoulement d'huile (36) agencé sur la bielle est doté d'un système de commande au moyen duquel l'actionneur peut être activé et désactivé.

10. Ensemble d'axes de piston selon la revendication 9, **caractérisé en ce que** l'actionneur comprend une soupape (35) qui est fermée lorsque la pression d'huile de lubrification est au premier niveau normal et ouverte lorsque la pression d'huile de lubrification est au deuxième niveau élevé au-dessus du premier niveau.
